# EUROPÄISCHE PATENTSCHRIFT

(11) **EP 1 288 652 B1**
(45) Veröffentlichungstag und Bekanntmachung des Hinweises auf die Patenterteilung: **02.05.2012**
(21) Anmeldenummer: 02017884.4
(22) Anmeldetag: 09.08.2002
(51) Int. Cl.: G01N 23/207, G01N 23/20

(54) **Röntgenstrahlen-Diffraktometer mit röntgenoptischen Elementen zur Ausbildung mehrerer Strahlpfade**
X-ray diffractometer with X-ray optical elements for generating several X-ray paths
Diffractomètre à rayons X avec dispositifs optiques de rayons X pour la génération de plusieurs trajéctoires de rayons X

(30) Priorität: 28.08.2001 DE 10141958
(43) Veröffentlichungstag der Anmeldung: 05.03.2003
(73) Patentinhaber: Bruker AXS GmbH, 76187 Karlsruhe (DE)
(72) Erfinder: Bahr, Detlef, 76149 Karlsruhe (DE); Kuhnmünch, Norbert, 76199 Karlsruhe (DE)
(74) Vertreter: Kohler Schmid Möbus

(56) Entgegenhaltungen:
- WO-A-00/26649
- WO-A-97/05474
- US-A- 4 274 000
- PATENT ABSTRACTS OF JAPAN vol. 017, no. 161 (P-1512), 29 March 1993 (1993-03-29) & JP 04 324348 A (SHIMADZU CORP), 13 November 1992 (1992-11-13)

## Beschreibung

Die Erfindung betrifft ein Röntgen-Diffraktometer mit einer Röntgen-Quelle, von der Röntgen-Strahlung auf eine zu untersuchende Probe geführt wird, mit einem Röntgen-Detektor zum Empfang von an der Probe gebeugter oder gestreuter oder von der Probe reflektierter Röntgen-Strahlung, sowie mit einem Goniometer zum sequentiellen Einstellen aufeinander folgender relativer Winkelpositionen zwischen Röntgen-Quelle, Probe und Röntgen-Detektor für die Erfassung von Röntgen-Beugungslinien, Röntgen-Streusignalen oder Röntgen-Reflektogrammen der zu untersuchenden Probe, wobei die Röntgen-Strahlung zumindest abschnittsweise auf unterschiedlichen Strahlpfaden geführt werden kann.

Eine solche Röntgen-Diffraktometer-Anordnung ist beispielsweise bekannt aus der Firmendruckschrift "X'Pert-MRD" der Firma Philips Analytical X-Ray B.V., Almelo, The Netherlands .

Die prinzipielle Funktionsweise eines Röntgen-Diffraktometers ist ausführlich in dem Firmenprospekt "DIFFRACTION SOLUTIONS D8 AD-VANCE" der Firma Bruker AXS Analytical X-Ray Systems GmbH aus dem Jahre 1997 beschrieben. Derartige Diffraktometer können breit gefächerte analytische Aufgabenstellungen auf den unterschiedlichsten Gebieten bewältigen, wie zum Beispiel in der Polymerchemie, der Glasherstellung, der Beschichtungstechnik, der Keramikherstellung, der Pharmazie, Mineralogie, der Geologie, der Halbleiter- und Supraleitertechnik, der Kraftwerkstechnik, aber auch in der Archäologie, der Umweltanalytik oder beispielsweise der Kriminalistik. Sowohl Routineeinsätze als auch anspruchsvolle Sonderanwendungen in der Pulverdiffraktometrie, wie beispielsweise qualitative und quantitative Phasenanalyse, Kristallitgrößenbestimmung und kristallographische Untersuchungen sind mit hoher Genauigkeit mit einem derartigen Röntgen-Diffraktometer möglich. Im Gegensatz zu einem Mehrkanal-Spektrometer enthält ein derartiges Röntgen-Diffraktometer ein Goniometer zum Einstellen aufeinander folgender relativer Winkelpositionen zwischen Quelle, Probe und Detektor. Damit können beispielsweise "Step Scans" oder kontinuierliche Scans durchgeführt werden. Sämtliche auf dem Goniometer befestigte Komponenten können schnell, einfach und reproduzierbar ausgetauscht werden.

In dem oben zitierten Firmenprospekt "X'Pert-MRD" der Firma Phillips ist ein Röntgen-Diffraktometer abgebildet, bei dem die Röntgenstrahlung auf unterschiedlichen Strahlpfaden geführt werden kann. Dadurch wird allerdings auch ein deutlich größerer Aufwand an einzusetzenden Komponenten, nämlich mehrere Detektoren und anschließende Messelektroniken, erforderlich. Die komplexe Anordnung hat überdies aufgrund ihres geometrischen Aufbaus einen erheblichen Platzbedarf. Dies hat eine Einschränkung des jeweils analytisch erfassbaren Winkelbereiches zur Folge.

Aufgabe der Erfindung ist es demgegenüber, eine Diffraktometer-Anordnung mit den eingangs genannten Merkmalen vorzustellen, die topologisch möglichst einfach aufgebaut ist, und aufgrund einer erheblich kompakteren Aufbauweise bei voller relativer Beweglichkeit der Teile einen wesentlich geringeren Platzbedarf aufweist, wobei die Anordnung auch die Einsparung von teuren Komponenten, insbesondere Detektoren und zugehöriger Messelektronik oder ggf. mehrerer RöntgenRöhren einschließlich Hochspannungs- und Kühlwasserzuführungen ermöglichen soll.

Erfindungsgemäß wird diese Aufgabe auf ebenso überraschend einfache wie wirkungsvolle Art und Weise dadurch gelöst, dass die Röntgen-Strahlung von einer Position 1 zu einer Position 2 entlang von n ≥ 2 unterschiedlichen, umschaltbaren Strahlpfaden geführt werden kann, wobei die unterschiedlichen Strahlpfade zwischen der Position 1 und der Position 2 relativ zueinander fest justiert sind und eine Einheit bilden, wobei die Probe entweder die Position 1 oder die Position 2 einnimmt und wobei die Umschaltung zwischen den unterschiedlichen Strahlpfaden durch relative Verdrehung der Einheit gegen die Probe um die Probenposition bewirkt werden kann.

Damit gelingt es mit technisch leicht zu realisierenden Mitteln, ein gattungsgemäßes Röntgen-Diffraktometer so aufzubauen, dass der nutzbare Winkelbereich bei allen durch die unterschiedlichen Strahlpfade ermöglichten Applikationen gegenüber der bekannten Anordnung erheblich erweitert wird. Dabei können die Strahlpfade so geführt werden, dass primärseitig zur Probe lediglich eine einzige Röntgen-Quelle, sekundärseitig zur Probe nur ein einziger Detektor erforderlich ist.

Bei einer besonders vorteilhaften Ausführungsform des erfindungsgemäßen Röntgen-Diffraktometers ist die Probe auf der Position 1 und der Detektor auf der Position 2 angeordnet. Das von der Probe ausgehende Röntgen-Licht kann hierbei auf unterschiedlichen Strahlpfaden mit unterschiedlichen physikalischen Eigenschaften durch einen einzigen Detektor und eine einzige Nachweiselektronik aufgenommen werden, so dass ganz erhebliche Einsparungen bei den teuren Komponenten möglich sind.

Bei einer alternativen Ausführungsform der Erfindung ist die Quelle auf der Position 1 und die Probe auf der Position 2 angeordnet. Die Probe kann bei dieser Ausführungsform mit unterschiedlich aufbereiteter bzw. selektierter Röntgen-Strahlung beleuchtet werden, um unterschiedliche Arten von Messungen durchführen zu können, ohne dass zwischen den Messungen Umbauten und Neujustagen erforderlich werden.

Ganz besonders bevorzugt ist eine Ausführungsform der erfindungsgemäßen Anordnung, bei der mindestens einer der Strahlpfade ein dispersives oder reflektierendes Röntgen-optisches Element enthält, wie z.B. einen Kristall, einen Channelcut-Kristall, einen Mosaik-Kristall, eine Multilayer-Struktur, einen Röntgen-Spiegel, ein Beugungsgitter, oder ein anderes dispersives oder reflektierendes Röntgen-optisches Element. Mit Hilfe dieser Elemente lässt sich aus einem einfallenden, polychromatischen Röntgenstrahl im wesentlichen monochromatisches Röntgenlicht erzeugen, was sowohl eine Behandlung des auf die Probe auftreffenden Röntgenlichtes als auch eine Selektion bzw. Verarbeitung der von der Probe ausgehenden Röntgen-Strahlung ermöglicht.

Besonders bevorzugt ist auch eine Ausführungsform des erfindungsgemäßen Röntgen-Diffraktometers, bei der mindestens einer der Strahlpfade weder ein dispersives noch ein reflektierendes Röntgen-optisches Element enthält. In der Regel wird dieser besondere Strahlpfad den direkten Durchgang der Röntgenstrahlung zwischen Position 1 und Position 2 ermöglichen, um eine besonders hohe Strahlungsintensität durch die direkte Strahlführung bereitzustellen.

Bei einer vorteilhaften Weiterbildung dieser Ausführungsform enthält dieser direkte Strahlpfad eine Röntgenlinse, die entweder als Sammellinse, als Zerstreuungslinse oder als parallelisierende Halblinse ausgestaltet sein kann.

Besonders vorteilhaft ist auch eine Ausführungsform der Erfindung, bei der mindestens einer der Strahlpfade eine einstellbare und/oder austauschbare Blende enthält. Damit sind nahezu beliebige Intensitätsanpassungen der auf dem jeweiligen Strahlpfad durchgehenden Röntgen-Strahlung sowie das Ausblenden von unerwünschtem Streulicht möglich.

Vorteilhaft ist auch eine Ausführungsform, bei der mindestens einer der Strahlpfade eine Verschlussblende (=Shutter) enthält. Auch hierdurch lässt sich Störlicht vermeiden. Zudem können gezielt bestimmte Strahlpfade von der Messung ausgeblendet werden.

Ganz besonders einfach ist eine Ausführungsform des erfindungsgemäßen Röntgen-Diffraktometers, bei der lediglich n = 2 unterschiedliche, umschaltbare Strahlpfade vorgesehen sind.

Bei etwas komplexeren Ausführungsformen werden n > 2 unterschiedliche, umschaltbare Strahlpfade vorgesehen. Diese können bei einfacheren Varianten koplanar verlaufen, so dass die Strahlführung im wesentlichen in einer Ebene konzentriert ist.

Bei komplexeren Varianten liegen nicht alle Strahlpfade in einer gemeinsamen Ebene, sondern es findet eine Ablenkung in räumliche Winkelbereiche statt, wobei diese Varianten allerdings hauptsächlich für Punktfokusapplikationen sinnvoll sind.

Eine besonders vorteilhafte Weiterbildung dieser Ausführungsformen des erfindungsgemäßen Röntgen-Diffraktometers zeichnet sich dadurch aus, dass mehrere Strahlpfade gegenüber demjenigen Strahlpfad, der die Position 1 direkt mit der Position 2 verbindet, abgeknickt verlaufen und aus jeweils zwei geraden Teilpfaden zusammengesetzt sind, wobei im Knickpunkt ein dispersives oder reflektierendes Röntgen-optisches Element angeordnet ist, und dass die Abknickpunkte zumindest einiger dieser Teilpfade auf einem gemeinsamen Kreis um den direkten Strahlpfad zwischen Position 1 und Position 2 angeordnet sind.

Die Hauptapplikation dieser Weiterbildung der Erfindung dürfte bei Fällen zu suchen sein, bei denen mit einem einzigen bestimmten Kristallmaterial unter Verwendung der gleichen Netzebenenschar jeweils die gleiche Wellenlänge selektiert werden soll. Es kann dann auf den verschiedenen Strahlpfaden die Auflösung, die Divergenz, die Intensität und die Monochromasie je nach Bedarf und spezieller Anforderung unterschiedlich eingestellt werden, ohne dass unterschiedliche Kristallmaterialien verwendet werden müssten.

Bei speziellen Ausführungsformen der Erfindung können die Einheiten mit den relativ zueinander fest justierten unterschiedlichen Strahlpfaden sowohl quellenseitig als auch detektorseitig vorgesehen sein. Diese Ausführungsformen zeichnen sich dadurch aus, dass die Quelle auf der Position 1 und die Probe auf der Position 2, die einer Position 1' entspricht, angeordnet sind, und dass der Detektor auf einer der Position 1' zugeordneten Position 2' angeordnet ist. Auf diese Weise lassen sich die Vorteile der Erfindung gewissermaßen "beiderseits der Probe" ausnutzen.

Im Gegensatz zu den erfindungsgemäßen Röntgen-Diffraktometern enthalten Mehrkanal-Röntgen-Spektrometer keine Goniometer mit bewegten Strahlenpfaden. In der WO 97/05474 A1 ist beispielsweise ein Mehrkanal-Röntgen-Spektrometer beschrieben, in dem zwar eine Umschaltung der Strahlengänge vorgesehen ist, die aber durch Rotation einer Kristalltrommel bewirkt wird, wobei der einzelne Strahlenpfad als solcher nicht bewegt werden kann, sondern starr immer an dem gleichen Ort innerhalb der Apparatur vorgesehen ist.

Ein Mehrkanal-Röntgen-Spektrometer, bei dem zwei Strahlengänge vorgesehen sind, für die lediglich ein Detektor und eine einzige Messelektronik erforderlich sind, ist in der DE 198 20 861 A1 beschrieben. Auch hier gibt es aber wiederum keinerlei Bewegung der Strahlengänge, die als solche starr in der Apparatur angeordnet sind, insbesondere ist hierzu kein Goniometer vorgesehen.

In dem Dokument JP 04324348 wird durch Drehung der Probe der Strahlengang verändert. Die zwei alternativen Strahlengänge besitzen unterschiedliche optische Elemente und je einen Detektor.

Die Erfindung betreffend ergeben sich weitere Vorteile aus den Zeichnungen und der Beschreibung. Ebenso können die vorstehend genannten und die noch weiter aufgeführten Merkmale erfindungsgemäß einzeln für sich und zu mehreren in beliebigen Kombinationen Verwendung finden. Die gezeigten und beschriebenen Ausführungsformen sind nicht als abschließende Aufzählung zu verstehen, sondern haben vielmehr beispielhaften Charakter für die Schilderung der Erfindung.

Die Erfindung ist in Zeichnungen dargestellt und wird anhand von Ausführungsbeispielen näher erläutert. Es zeigen:
- Fig. 1: eine schematische Darstellung einer relativ zur Probenposition verschwenkbaren Einheit mit zwei unterschiedlichen Strahlpfaden und einem Detektor als Teil des erfindungsgemäßen Röntgen-Diffraktometers;
- Fig. 2: wie Fig. 1, wobei die verschwenkbare Einheit mit anderen röntgenoptischen Elementen bestückt ist;
- Fig. 3: eine Einheit mit zwei Strahlpfaden und der zusammen mit der Einheit relativ zur Probe verschwenkbaren Röntgen-Quelle; und
- Fig. 4: einen Teil eines Diffraktometers nach dem Stand der Technik mit zwei Strahlenpfaden, an deren Ende jeweils ein Detektor angeordnet ist.

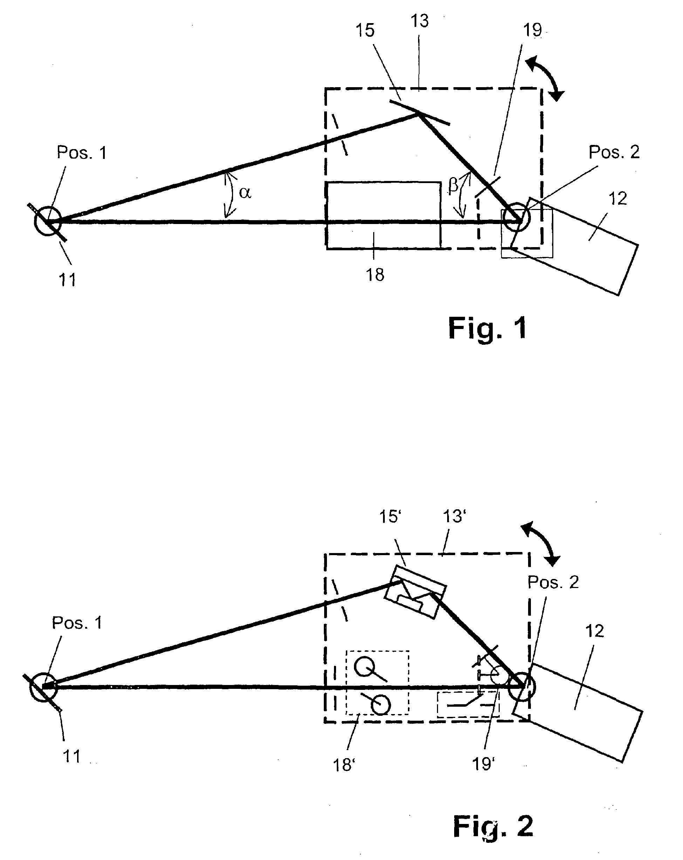

Der in Fig. 1 schematisch dargestellte Nachweisteil eines erfindungsgemäßen Röntgen-Diffraktometers umfasst eine Probe 11 auf der Position 1, einen Detektor 12 an der Position 2 sowie zwei relativ zueinander starr justierte Strahlpfade, von denen der eine geradlinig von der Position 1, an der die Probe 11 angeordnet ist, durch ein als Kästchen dargestelltes Blendensystem 18 mit einstellbaren und/oder austauschbaren Blenden zur Position 2 am Eingang des Röntgen-Detektors 12 verläuft, während der andere Strahlpfad demgegenüber zunächst unter einem Winkel α von der Probenposition in einem ersten geraden Teilstück zu einem dispersiven oder reflektierenden Röntgen-optischen Element 15 verläuft, und von dort in einem zweiten geraden Teilstück unter einem Winkel β zum ersten Strahlpfad auf die Position 2 am Eingang des Röntgen-Detektors 12 geführt ist. Mittels einer Verschlussblende 19 kann der abgeknickte Strahlpfad gegenüber dem Detektor 12 ausgeblendet werden oder umgekehrt.

Beide Strahlpfade sowie der Detektor 12, das Röntgen-optische Element 15 sowie das Blendensystem 18 sind relativ zueinander starr justiert und können in einer Einheit 13 um die Position 1 relativ zur Probe 11 gemeinsam verschwenkt werden, wobei hierfür entweder die Einheit 13 oder die Probe 11 bewegt wird.

Die in Fig. 2 schematisch dargestellte Einheit 13', die wiederum relativ zur Position 1 der Probe 11 verschwenkt werden kann, enthält neben den beiden unterschiedlichen, ebenfalls relativ zueinander starr justierten Strahlpfaden von der Position 1 der Probe 11 zur Position 2 am Eingang des Detektors 12 ein dispersives Röntgen-optisches Element 15' in Form eines Channelcut-Kristalles. Der abgeknickte Strahlpfad kann wiederum mittels einer Verschlussblende 19', deren elektrische Ansteuerung ebenfalls schematisch angedeutet ist, gegenüber dem Detektor 12 ausgeblendet werden. Die elektrische Ansteuerung kann beispielsweise in Form eines Mikroschalters verwirklicht sein. Außerdem umfasst die Einheit 13' auf dem geradlinigen Strahlpfad eine variable Blendeneinheit 18', mit der das Röntgenlicht auf dem geradlinigen Strahlpfad stufenlos abgeblendet werden kann.

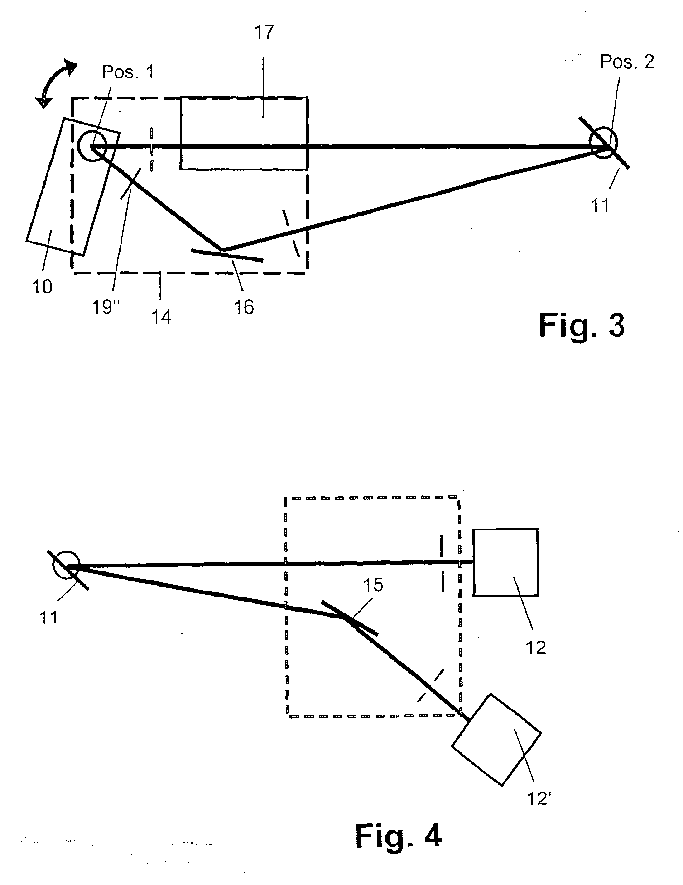

In Fig. 3 ist die Quellenseite eines erfindungsgemäßen Röntgen-Diffraktometers schematisch gezeigt, wobei eine Röntgen-Quelle 10 mit ihrem Ausgangspunkt, in der Regel ihrem Elektronenfokus auf der Position 1 angeordnet ist, während die Probe 11 auf der Position 2 sitzt. Auch hier wiederum ist eine relativ zum Probenort verschwenkbare Einheit 14 vorgesehen, in der zwei unterschiedliche Strahlengänge, nämlich wiederum ein geradliniger und ein abgeknickter relativ zueinander starr justiert relativ zum Probenort auf der Position 2 verschwenkbar sind. Die Einheit 14 umfasst ein röntgen-optisches Element 16, das beispielsweise eine Einrichtung zur Monochromatisierung des auf dem abgeknickten Strahlpfad verlaufenden Röntgenlichtes enthalten kann.

Auf dem geradlinigen Strahlpfad ist in diesem Ausführungsbeispiel eine schematisch als Kästchen dargestellte Röntgen-Linse 17 angeordnet, mit der unter einem gewissen Divergenz-Winkel aus der Röntgen-Quelle 10 austretendes Röntgenlicht auf den Ort der Probe 11 fokussiert werden kann. Um den abgeknickten oder geradlinigen Strahlpfad gegenüber der Probe 11 auszublenden, ist auch eine Verschlussblende 19" nach dem Ausgang aus der Röntgen-Quelle 10 vorgesehen.

Zum Vergleich ist in Fig. 4 schematisch die Nachweisseite eines Röntgen-Diffraktometers nach dem Stand der Technik gezeigt, bei der von der Probe 11 ausgehend zwei fest justierte Strahlpfade vorgesehen sind, von denen einer direkt in einen Detektor 12 und der andere über ein Röntgen-optisches Element 15 in einen weiteren Detektor 12' verläuft. Bei einer Verschwenkung der beiden Strahlpfade um den Ort der Probe 11 schränkt jeweils der eine der beiden Detektoren den geometrisch überfahrbaren Bereich des anderen Detektors ein.

In der Zeichnung nicht dargestellt sind weitere Ausführungsformen der Erfindung, bei denen beispielsweise sowohl quellenseitig als auch detektorseitig jeweils eine oder mehrere verschwenkbare Einheiten mit relativ zueinander fest justierten Strahlpfaden vorgesehen sein können. In diesem Falle wird dann die Quelle 10 auf der Position 1, die Probe 11 auf der Position 2, die einer Position 1' entspricht, und der Detektor 12 auf einer Position 2' angeordnet, wobei die Positionen 1' und 2' einander zugeordnet sind und die Funktion der oben diskutierten Positionen 1 und 2 übernehmen, so dass die Erfindung gewissermaßen beiderseits der Probe 11, um die sich die entsprechenden Einheiten drehen können, verwirklicht ist.

Weitere, ebenfalls in der Zeichnung nicht näher dargestellte Ausführungsformen können auch Einheiten mit mehr als zwei unterschiedlichen Strahlpfaden enthalten. Diese können entweder in einer Ebene verlaufen, aber auch unter Raumwinkeln von der Position 1 weg und auf die Position 2 zu verlaufen.

## Patentansprüche

1. Röntgen-Diffraktometer mit einer Röntgen-Quelle (10), von der Röntgen-Strahlung auf eine zu untersuchende Probe (11) geführt wird, mit einem Röntgen-Detektor (12, 12') zum Empfang von an der Probe (11) gebeugter oder gestreuter oder von der Probe (11) reflektierter Röntgen-Strahlung, sowie mit einem Goniometer zum sequentiellen Einstellen aufeinander folgender relativer Winkelpositionen zwischen Röntgen-Quelle (10), Probe (11) und Röntgen-Detektor (12, 12') für die Erfassung von Röntgen-Beugungslinien, Röntgen-Streusignalen oder Röntgen-Reflektogrammen der zu untersuchenden Probe (11), wobei die Röntgen-Strahlung zumindest abschnittsweise auf unterschiedlichen Strahlpfaden geführt werden kann,
**dadurch gekennzeichnet,**
**dass** die Röntgen-Strahlung von einer Position 1 zu einer Position 2 entlang von n ≥ 2 unterschiedlichen, umschaltbaren Strahlpfaden geführt werden kann, wobei röntgenoptische Führungsmittel wie Röntgenoptische Elemente (15, 15', 16), Blenden (18, 18', 19, 19', 19") oder Röntgenlinsen (17) für die unterschiedlichen Strahlpfade zwischen der Position 1 und der Position 2 relativ zueinander fest justiert sind und eine Einheit (13; 13'; 14) bilden, wobei die Probe (11) entweder die Position 1 oder die Position 2 einnimmt und wobei die Umschaltung zwischen den unterschiedlichen Strahlpfaden durch relative Verdrehung der Einheit (13; 13'; 14) gegen die Probe (11) um die Probenposition bewirkbar ist, und dass die Einheit (13; 13'; 14) die Röntgen-Quelle (10) oder den Röntgen-Detektor (12, 12') aufweist.

2. Röntgen-Diffraktometer nach Anspruch 1, **dadurch gekennzeichnet, dass** die Probe (11) auf der Position 1 und der Detektor (12) auf der Position 2 angeordnet ist.

3. Röntgen-Diffraktometer nach Anspruch 1, **dadurch gekennzeichnet, dass** die Quelle (10) auf der Position 1 und die Probe (11) auf der Position 2 angeordnet ist.

4. Röntgen-Diffraktometer nach einem der vorhergehenden Ansprüche, **dadurch gekennzeichnet, dass** mindestens einer der Strahlpfade ein dispersives oder reflektierendes Röntgen-optisches Element (15; 15'; 16) enthält, wie z.B. einen Kristall, einen Channelcut-Kristall, einen Mosaik-Kristall, eine Multilayer-Struktur, einen Röntgen-Spiegel, ein Beugungsgitter, oder ein anderes dispersives oder reflektierendes Röntgen-optisches Element.

5. Röntgen-Diffraktometer nach einem der vorhergehenden Ansprüche, **dadurch gekennzeichnet, dass** mindestens einer der Strahlpfade weder ein dispersives noch ein reflektierendes Röntgen-optisches Element enthält.

6. Röntgen-Diffraktometer nach Anspruch 5, **dadurch gekennzeichnet, dass** mindestens einer der Strahlpfade eine Röntgen-Linse (17) enthält.

7. Röntgen-Diffraktometer nach einem der vorhergehenden Ansprüche, **dadurch gekennzeichnet, dass** mindestens einer der Strahlpfade eine einstellbare und/oder austauschbare Blende (18; 18') enthält.

8. Röntgen-Diffraktometer nach einem der vorhergehenden Ansprüche, **dadurch gekennzeichnet, dass** mindestens einer der Strahlpfade eine Verschlussblende (=Shutter) (19; 19'; 19") enthält.

9. Röntgen-Diffraktometer nach einem der vorhergehenden Ansprüche, **dadurch gekennzeichnet, dass** n = 2 unterschiedliche, umschaltbare Strahlpfade vorgesehen sind.

10. Röntgen-Diffraktometer nach einem der Ansprüche 1 bis 8, **dadurch gekennzeichnet, dass** n > 2 unterschiedliche, umschaltbare Strahlpfade vorgesehen sind, und dass die Strahlpfade koplanar verlaufen.

11. Röntgen-Diffraktometer nach einem der Ansprüche 1 bis 8, **dadurch gekennzeichnet, dass** n > 2 unterschiedliche, umschaltbare Strahlpfade vorgesehen sind, und dass nicht alle Strahlpfade in einer gemeinsamen Ebene liegen.

12. Röntgen-Diffraktometer nach Anspruch 11, **dadurch gekennzeichnet, dass** mehrere Strahlpfade gegenüber demjenigen Strahlpfad, der die Position 1 direkt mit der Position 2 verbindet, abgeknickt verlaufen und aus jeweils zwei geraden Teilpfaden zusammengesetzt sind, wobei im Knickpunkt ein dispersives oder reflektierendes Röntgen-optisches Element (15; 15'; 16) angeordnet ist, und dass die Abknickpunkte zumindest einiger dieser Teilpfade auf einem gemeinsamen Kreis um den direkten Strahlpfad zwischen Position 1 und Position 2 angeordnet sind.

13. Röntgen-Diffraktometer nach einem der vorhergehenden Ansprüche, **dadurch gekennzeichnet, dass** die Quelle (10) auf der Position 1 und die Probe (11) auf der Position 2, die einer Position 1' entspricht, angeordnet sind, und dass der Detektor (12) auf einer der Position 1' zugeordneten Position 2' angeordnet ist.

## Claims

1. X-ray diffractometer comprising an X-ray source (10) from which X-rays are guided to a sample (11) to be investigated, an X-ray detector (12, 12') for receiving X-rays diffracted or scattered from or reflected by the sample (11), and a goniometer for sequential adjustment of consecutive relative angular positions between the X-ray source (10), the sample (11), and the X-ray detector (12, 12') for detecting X-ray diffraction lines, X-ray scattered signals or X-ray reflectograms of the sample (11) to be investigated, wherein the X-rays can be guided, at least sectionally, along different optical paths, **characterized in that**
the X-rays can be guided from a position 1 to a position 2 along n≥2 different switchable optical paths, wherein X-ray optical guiding means such as X-ray optical elements (15, 15', 16), apertures (18, 18', 19, 19', 19") or X-ray lenses (17) for the different optical paths are fixed relative to each other between position 1 and position 2 and form a unit (13; 13'; 14), wherein the sample (11) assumes either position 1 or position 2, and wherein switching over between the different optical paths can be effected by turning the unit (13; 13'; 14) relative to the sample (11) about the sample position, and that the unit (13; 13'; 14) comprises the X-ray source (10) or the X-ray detector (12, 12').

2. X-ray diffractometer according to claim 1, **characterized in that** the sample (11) is disposed at the position 1 and the detector (12) at the position 2.

3. X-ray diffractometer according to claim 1, **characterized in that** the source (10) is disposed at the position 1 and the sample (11) at the position 2.

4. X-ray diffractometer according to any one of the preceding claims, **characterized in that** at least one of the optical paths contains a dispersive or reflecting X-ray optical element (15; 15'; 16) such as a crystal, a channelcut crystal, a mosaic crystal, a multi-layer structure, an X-ray mirror, a diffraction grid or another dispersive or reflecting X-ray optical element.

5. X-ray diffractometer according to any one of the preceding claims, **characterized in that** at least one of the optical paths contains neither a dispersive nor a reflecting X-ray optical element.

6. X-ray diffractometer according to claim 5, **characterized in that** at least one of the optical paths contains an X-ray lens (17).

7. X-ray diffractometer according to any one of the preceding claims, **characterized in that** at least one of the optical paths contains an adjustable and/or replaceable aperture (18; 18').

8. X-ray diffractometer according to any one of the preceding claims, **characterized in that** at least one of the optical paths has a shutter (19; 19'; 19").

9. X-ray diffractometer according to any one of the preceding claims, **characterized in that** n=2 different, switchable optical paths are provided.

10. X-ray diffractometer according to any one of the claims 1 through 8, **characterized in that** n>2 different, switchable optical paths are provided, wherein the optical paths extend in a coplanar fashion.

11. X-ray diffractometer according to any one of the claims 1 through 8, **characterized in that** n>2 different, switchable optical paths are provided, with not all optical paths being disposed in a common plane.

12. X-ray diffractometer according to claim 11, **characterized in that** several optical paths have a bent extension compared to that optical path which directly connects position 1 to position 2, and are composed of two straight partial paths each, wherein a dispersive or reflecting X-ray optical element (15; 15'; 16) is disposed at the bending point and the bending points of at least some of these partial paths are disposed on a common circle about the direct optical path between position 1 and position 2.

13. X-ray diffractometer according to any one of the preceding claims, **characterized in that** the source (10) is disposed at the position 1 and the sample (11) is disposed at the position 2 which corresponds to a position 1' and the detector (12) is disposed at a position 2' associated with position 1'.

## Revendications

1. Diffractomètre à rayons X avec une source de rayons X (10), de laquelle un rayonnement X est guidé sur un échantillon (11) à analyser, avec un détecteur de rayons X (12, 12') pour recevoir le rayonnement X diffracté ou dispersé sur l'échantillon (11) ou réfléchi par l'échantillon (11), ainsi qu'avec un goniomètre pour le réglage séquentiel de positions angulaires relatives successives entre source de rayons X (10), échantillon (11) et détecteur de rayons X (12, 12') pour la détection de raies de diffraction X, de signaux de dispersion X ou de réflectogrammes X de l'échantillon (11) à analyser, le rayonnement X pouvant être guidé au moins sectoriellement sur différents trajets de faisceau,
**caractérisé en ce**
**que** le rayonnement X peut être guidé d'une position 1 vers une position 2 le long de n ≥ 2 trajets de faisceau différents commutables, des moyens de guidage de rayons X tels que des éléments optiques (15, 15', 16) à rayons X, des diaphragmes (18, 18', 19, 19', 19") à rayons X ou des lentilles à rayons X (17) pour les différents trajets de faisceau entre la position 1 et la position 2 étant réglés de manière fixe les uns par rapport aux autres et formant une unité (13 ; 13' ; 14), l'échantillon (11) occupant soit la position 1, soit la position 2, et la commutation entre les différents trajets de faisceau pouvant être produite par rotation relative de l'unité (13 ; 13' ; 14) par rapport à l'échantillon (11) autour de la position de l'échantillon, et que l'unité (13 ; 13' ; 14) comporte la source de rayons X (10) ou le détecteur de rayons X (12, 12').

2. Diffractomètre à rayons X selon la revendication 1, **caractérisé en ce que** l'échantillon (11) est disposé à la position 1 et le détecteur (12) à la position 2.

3. Diffractomètre à rayons X selon la revendication 1, **caractérisé en ce que** la source (10) est disposée à la position 1 et l'échantillon (11) à la position 2.

4. Diffractomètre à rayons X selon une des revendications précédentes, **caractérisé en ce qu'**au moins un des trajets de faisceau contient un élément optique à rayons X (15 ; 15' ; 16) dispersif ou réflecteur, comme par exemple un cristal, un cristal channel-cut, un cristal mosaïque, une structure multicouche, un miroir à rayons X, un réseau de diffraction ou un autre élément optique à rayons X dispersif ou réflecteur.

5. Diffractomètre à rayons X selon une des revendications précédentes, **caractérisé en ce qu'**au moins un des trajets de faisceau ne contient ni un élément optique à rayons X dispersif ni un élément optique à rayons X réflecteur.

6. Diffractomètre à rayons X selon la revendication 5, **caractérisé en ce que** qu'au moins un des trajets de faisceau contient une lentille à rayons X (17).

7. Diffractomètre à rayons X selon une des revendications précédentes, **caractérisé en ce qu'**au moins un des trajets de faisceau contient un diaphragme (18 ; 18') réglable et/ou échangeable.

8. Diffractomètre à rayons X selon une des revendications précédentes, **caractérisé en ce qu'**au moins un des trajets de faisceau contient un obturateur (= shutter) (19 ; 19' ; 19").

9. Diffractomètre à rayons X selon une des revendications précédentes, **caractérisé en ce que** n = 2 trajets de faisceau différents commutables sont prévus.

10. Diffractomètre à rayons X selon une des revendications 1 à 8, **caractérisé en ce que** n > 2 trajets de faisceau différents commutables sont prévus, et que les trajets de faisceau sont coplanaires.

11. Diffractomètre à rayons X selon une des revendications 1 à 8, **caractérisé en ce que** n > 2 trajets de faisceau différents commutables sont prévus, et que tous les trajets de faisceau ne sont pas situés dans un plan commun.

12. Diffractomètre à rayons X selon la revendication 11, **caractérisé en ce que** plusieurs trajets de faisceau sont coudés par rapport au trajet de faisceau qui relie directement la position 1 à la position 2 et composés chaque fois de deux trajets partiels rectilignes, un élément optique à rayons X dispersif ou réflecteur (15 ; 15' ; 16) étant disposé au coude, et que les coudes d'au moins quelques-uns de ces trajets partiels sont disposés sur un cercle commun autour du trajet de faisceau direct entre la position 1 et la position 2.

13. Diffractomètre à rayons X selon une des revendications précédentes, **caractérisé en ce que** la source (10) est disposée à la position 1 et l'échantillon (11) à la position 2 qui correspond à une position 1', et que le détecteur (12) est disposé à une position 2' associée à la position 1'.
